# EUROPÄISCHE PATENTSCHRIFT

(11) **EP 2 286 495 B1**
(45) Veröffentlichungstag und Bekanntmachung des Hinweises auf die Patenterteilung: **20.11.2019**
(21) Anmeldenummer: 09757501.3
(22) Anmeldetag: 02.06.2009
(51) Int. Cl.: H02B 13/045, H02G 5/00

(54) **ANORDNUNG MIT EINEM KAPSELUNGSGEHÄUSE**
ARRANGEMENT WITH AN ENCAPSULATING HOUSING
DISPOSITIF PRÉSENTANT UN BOÎTIER D'ENCAPSULAGE

(30) Priorität: 06.06.2008 DE 102008027642
(43) Veröffentlichungstag der Anmeldung: 23.02.2011
(73) Patentinhaber: Siemens Aktiengesellschaft, 80333 München (DE)
(72) Erfinder: RAUTENBERG, Steffen, 12161 Berlin (DE); SCHMIDTKE, Markus, 16562 Bergfelde (DE)
(86) Internationale Anmeldenummer: PCT/EP2009/056706
(87) Internationale Veröffentlichungsnummer: WO 2009/147120

(56) Entgegenhaltungen:
- CH-A- 500 605
- DE-A1- 2 603 040
- GB-A- 1 404 931
- JP-A- S5 610 017
- JP-A- S62 293 917
- US-A- 4 071 268

## Beschreibung

Die Erfindung betrifft einen Kapselungsabschnitt einer druckgasisolierten Elektroenergieübertragungseinrichtung mit einem Kapselungsgehäuse, aufweisend einen ersten Rohrabschnitt und einen zweiten Rohrabschnitt, die relativ zueinander bewegbar sind und zumindest ein variables Kapselungsvolumen teilweise begrenzen und der Kapselungsabschnitt zumindest ein elektrisch aktives Leiterelement umgibt, wobei
ein Kanal das Kapselungsvolumen mit einem umgekehrt proportional zu einer Volumenänderung des Kapselungsvolumens veränderbaren Kompensationsvolumen verbindet.

Eine Anordnung ist beispielsweise aus der Offenlegungsschrift DT 26 03 040 A1 bekannt. Dort ist ein Kapselungsteil mit axialem Dehnungsausgleich für gekapselte elektrische Schaltanlagen und Leitungen beschrieben. Das Kapselungsteil weist zwei Rohrabschnitte auf, die relativ zueinander bewegbar sind. Dazu ragen die Rohrabschnitte ineinander und sind innerhalb eines Überdeckungsabschnittes gegeneinander abgedichtet. Im Innern der dortigen Rohrabschnitte ist ein Kapselungsvolumen angeordnet. Das Kapselungsvolumen wird durch die Rohrabschnitte begrenzt. Aufgrund der relativen Bewegbarkeit der Rohrabschnitte zueinander ist das Kapselungsvolumen variabel.

Die bekannte Anordnung dient dem Einsatz in gekapselten elektrischen Schaltanlagen und Leitungen. Zur elektrischen Isolation ist das Innere mit einem Isoliergas befüllt, welches innerhalb des Kapselungsvolumens hermetisch abgeschlossen ist. Bei einer entsprechenden Variation des Kapselungsvolumens ändert sich die Druckbeaufschlagung des Isoliergases. Bewegungen der Rohrabschnitte müssen daher ggf. gegen einen im Innern vorhandenen Druck erfolgen bzw. Bewegungen werden zusätzlich durch den im Inneren des Kapselungsvolumens herrschenden Druck unterstützt.

Damit wird die Anordnung mit zusätzlichen Kräften beaufschlagt.

Die Patentschrift CH 500 605 gibt eine weitere Ausgestaltungsmöglichkeit eines Kapselungsabschnittes an. Zwei Rohrabschnitte überdecken einander und sind relativ zueinander bewegbar. Auch hier wird eine Relativbewegung durch ein im Innern eingeschlossenes Gas beeinflusst.

Aus der JP56-10017 geht ein Kapselungsabschnitt hervor, bei welchem der Kapselungsabschnitt selbst abschnittsweise formveränderliche Wandungen aufweist, wobei über ein Rohrsystem ein Kapselungsvolumen, welches ebenfalls formveränderliche Wandungen aufweist, angekoppelt ist. Über entsprechende Mechaniken wird ein synchronisiertes Bewegen bzw. Umformen der formveränderlichen Wandungen des Kapselungsvolumens bzw. des Kompensationsvolumens vorgenommen. Aus der JP62-293917 ist ein Kapselungsgehäuse bekannt, welches relativ zueinander bewegbare Rohrabschnitte aufweist. Um die Rohrabschnitte zu justieren, sind diese mit einem Kolben bzw. einem Zylinder gekoppelt. Durch ein Einleiten von Luft über eine Luftleitung ist im Zuge eines Montagevorganges eine Längenänderung möglich.

Aus der Patentschrift GB 1 404 931 ist eine gasisolierte gekapselte elektrische Schaltanlage bekannt. Ein erster und ein zweiter Rohrabschnitt sind relativ zueinander bewegbar. Die beiden Rohrabschnitte sind über einen Faltenbalg dichtend miteinander verbunden. Die bekannte Anordnung weist ein Kompensationsvolumen auf. Das Kompensationsvolumen weist mehrere am Umfang des die beiden Rohrabschnitte verbindenen Faltenbalges angeordnete Teilvolumina auf. Jedes der Teilvolumina ist mit einem Faltenbalg ausgestattet und über eine separate Verrohrung an einen Rohrabschnitt angeschlossen. Innerhalb des bekannten Kapselungsabschnittes ist ein elektrisch aktives Leiterelement angeordnet.

Zur Ausbildung einer kräftekompensierten Anordnung sind Faltenbälge eingesetzt, die zur Unterstützung einer ausreichenden Verformbarkeit dünne Wandungen aufweisen. Derartige Faltenbälge stellen eine Schwachstelle dar. Die im Vergleich zu den Rohrabschnitten dünnen Wandungen weisen eine reduziert Widerstandsfähigkeit gegenüber vom elektrisch aktiven Leiterelement ausgehenden Lichtbögen auf. So ist es beispielsweise möglich, dass ein Lichtbogen bevorzugt durch Faltenbälge hindurchbrennt und damit die Umgebung des Kapselungsabschnittes gefährdet.

Daher ergibt sich als Aufgabe der Erfindung einen Kapselungsabschnitt anzugeben, welcher eine möglichst kräftefreie Relativbewegung der Rohrabschnitte zueinander ermöglicht und eine erhöhte Widerstandsfähigkeit gegenüber Lichtbogenerscheinungen aufweist.

Erfindungsgemäß wird dies bei einem Kapselungsabschnitt der eingangs genannten Art dadurch gelöst, dass das Kompensationsvolumen einen Kolben und einen Zylinder aufweist, wobei der Kolben und der Zylinder jeweils mit einem der Rohrabschnitte gekoppelt sind, wobei zur Kopplung zumindest des Kolbens ein Gewindeflansch in eine Mantelfläche eines der Rohrabschnitte eingeschraubt und von dem Kanal durchsetzt ist.

Die beiden Rohrabschnitte begrenzen ein variables Kapselungsvolumen zumindest teilweise. Typischerweise wird innerhalb der Rohrabschnitte ein im Wesentlichen kreiszylindrischer Raum zur Verfügung gestellt, welcher mit einem Isolierfluid befüllbar ist. Als Isolierfluide eignen sich beispielsweise Isolieröle, Isoliergase, wie Stickstoff und Schwefelhexafluorid, sowie weitere Isoliermedien. Das Isoliermedium ist hermetisch abgeschlossen, so dass die Menge an Isoliermedium im Innern des Kapselungsgehäuses konstant ist. Zum Abschluss der Rohrabschnitte können beispielsweise Verschlussdeckel, Isolatoren oder ähnliches vorgesehen sein. Diese Bauteile begrenzen mit den Rohrabschnitten das Kapselungsvolumen. Das im Innern des Kapselungsgehäuses angeordnete Isoliermedium wird mit einem entsprechenden Druck in das Kapselungsgehäuse eingefüllt. Innerhalb des Kapselungsgehäuses, auch Druckraum genannt, sind beispielsweise elektrisch aktive Leiterelemente, wie Phasenleiter, Schaltgeräte, Messwandler, Trennschalter, Erdungsschalter usw., angeordnet. Üblicherweise sind die Rohrabschnitte mit Erdpotential beaufschlagt und die elektrisch aktiven Teile im Innern sind elektrisch isoliert beabstandet zu den Rohrabschnitten gelagert. Das Isoliermedium/Isolierfluid isoliert die Rohrabschnitte von den elektrisch aktiven Leiterelementen. Die Rohrabschnitte können Teil einer Gesamtanlage mit mehreren Kapselungsvolumina sein oder auch größere Längen erreichen.

Das Kapselungsgehäuse kann vorteilhafterweise einen Kapselungsabschnitt einer druckgasisolierten Elektroenergieübertragungseinrichtung darstellen. Derartige druckgasisolierte Elektroenergieübertragungseinrichtungen sind beispielsweise druckgasisolierte Schaltanlagen oder druckgasisolierte Rohrleitungen. Im Innern der druckgasisolierten Elektroenergieübertragungseinrichtungen sind elektrisch aktive Leiterelemente angeordnet, welche elektrisch isoliert zu den Kapselungsgehäusen bzw. Rohrabschnitten zu lagern sind. Dazu sind entsprechende Feststoffisolatoren vorgesehen, welche eine ausreichende Schlagweite zur Trennung von unterschiedlichen elelektrischen Potentialen zwischen den Rohrabschnitten und den elektrisch aktiven Leiterelementen gewährleisten. Typischerweise sind die Rohrabschnitte bzw. die Kapselungsgehäuse einer druckgasisolierten Elektroenergieübertragungseinrichtung mit Erdpotential beaufschlagt. Als Isolierfluid eignen sich insbesondere elektrisch isolierende Gase wie SF₆, N₂ sowie Gemische, die mit einem erhöhten Druck beaufschlagt und innerhalb des Kapselungsgehäuses hermetisch abgeschlossen sind.

Bei einer Übertragung elektrischer Energie tritt an elektrisch aktiven Leiterelementen typischerweise Stromwärme und daraus folgend Temperaturschwankungen auf. Des Weiteren ist die Anordnung mit dem Kapselungsgehäuse im Regelfall einer Umgebung ausgesetzt, welche Temperaturschwankungen aufweist. Aufgrund von Temperaturschwankungen kommt es zu Wärmedehnungen in den Rohrabschnitten. Um ein Verformen bzw. Zerstören des Kapselungsgehäuses zu vermeiden und die Fluiddichtigkeit aufrecht zu erhalten, sind entsprechende Dehnungsausgleichelemente vorgesehen. Ein Dehnungsausgleichelement kann beispielsweise relativ zueinander bewegbare Rohrabschnitte aufweisen. Dabei ist eine entsprechende Dichtung zwischen den Rohrabschnitten vorzusehen.

Aufgrund einer Relativbewegung der Rohrabschnitte ist das Kapselungsvolumen, welches zumindest teilweise von den Rohrabschnitten begrenzt ist, in seinem Volumen variabel. Wegen der konstanten Menge an Isoliermedium innerhalb des Kapselungsgehäuses stellen sich bei der bekannten Anordnung unterschiedliche Drücke im Innern des Kapselungsvolumens ein. Durch ein erfindungsgemäßes Vorsehen eines Kompensationsvolumens, welches umgekehrt proportional zu der Volumenänderung des Kapselungsvolumens veränderlich ist, ist es möglich, den Druck im Innern des Kapselungsgehäuses trotz der variablen Abmaße des Kapselungsvolumens annähernd konstant zu halten. So bleibt das Volumen des Kapselungsgehäuses unabhängig von Relativbewegungen der Rohrabschnitte annähernd konstant. Dadurch ist es möglich, dass eine Relativbewegung zwischen den beiden Rohrabschnitten erfolgen kann, ohne dass von dem Isoliermedium Kräfte ausgehen. Dadurch ist ein leichtgängigeres Bewegen der beiden Rohrabschnitte relativ zueinander ermöglicht und die Gesamtkonstruktion kann schneller und direkter auf Wärmeänderungen reagieren. Damit kann die Dimensionierung der Rohrabschnitte vermindert werden.

Ein Kompensationsvolumen mit einem Kolben und einem Zylinder, wobei der Kolben und der Zylinder jeweils mit einem der Rohrabschnitte gekoppelt sind,ermöglicht es, mechanisch einfache Maschinenbauelemente zur Ausbildung des Kompensationsvolumens heranzuziehen und mit diesem ein leistungsfähiges Kompensationsvolumen zur Verfügung zu stellen. Durch eine Verwendung eines großen Kompensationsvolumens ist es möglich, Änderungen des Volumens des Kapselungsvolumens in größeren Bereichen zuzulassen, da ausreichender Bauraum zur Verfügung gestellt wird, um auch größere Mengen verdrängten Gases aus dem Kapselungsvolumen im Ausgleichsvolumen aufnehmen zu können. Eine Kopplung der Rohrabschnitte mit dem Zylinder bzw. mit dem Kolben kann beispielsweise über geeignete Getriebeanordnungen erfolgen. Somit ist es beispielsweise möglich, bei relativ geringen Wärmedehnungen über eine Getriebeanordnung eine Übersetzung hervorzurufen und einen relativ großen Hub des Kolbens hervorzurufen. Damit ist eine Möglichkeit gegeben, das Ausgleichsvolumen relativ variabel zu gestalten und an die jeweilig vorgesehenen Platzverhältnisse anzupassen.

Es kann weiterhin vorteilhaft vorgesehen sein, dass der Kolben und der Zylinder jeweils mit einem der Rohrabschnitte starr gekoppelt sind.

Eine starre Kopplung stellt eine Möglichkeit dar, große Kräfte zwischen einem Rohrabschnitt und einem daran gekoppelten Kolben oder Zylinder zu übertragen. Somit ist es möglich, robuste Konstruktionen auszugestalten, welche auch über längere Betriebszeiträume zuverlässig die umgekehrte Proportionalität der Volumenänderung von Kapselungsvolumen und Kompensationsvolumen realisieren. Dabei wird unter einer umgekehrten Proportionalität verstanden, dass in dem Maße, wie sich das Kapselungsvolumen vergrößert, eine Verringerung des Ausgleichsvolumens erfolgt und umgekehrt bei einer entsprechenden Verkleinerung des Kapselungsvolumens eine dieser Verkleinerung entsprechende Vergrößerung des Ausgleichsvolumens vorgenommen wird. So bleibt das Volumen des Kapselungsgehäuses annähernd konstant. Ist nunmehr eine starre Kopplung vorgesehen, so ist durch ein sogenanntes Prinzip der gleichen Flächen eine zwangsgeführte Einhaltung dieser Bedingung erfüllt. So ist es beispielsweise vorteilhaft vorzusehen, dass der Querschnitt des Kapselungsvolumens dem Querschnitt des Kompensationsvolumens bzw. des Kolbens entspricht. Somit ist es möglich, über den Kanal ein kräftefreies Überströmen des im Innern des Kapselungsgehäuses befindlichen Isoliermediums zwischen dem Kapselungsvolumen und dem Kompensationsvolumens zu bewirken.

Vorteilhafterweise kann weiterhin vorgesehen sein, dass zur starren Kopplung zumindest des Kolbens oder zumindest des Zylinders mit dem jeweiligen Rohrabschnitt ein Abschnitt des Kolbens/Zylinders an den jeweiligen Rohrabschnitt angeformt ist.

Eine Anformung eines Zylinders bzw. eines Kolbens an einen Rohrabschnitt kann beispielsweise im Rahmen eines Gussverfahrens erfolgen.

Es ist beispielsweise möglich, ein fluiddichtes Gussmaterial zu verwenden, beispielsweise eine Aluminiumlegierung, bei welchem zumindest der Kolben bzw. der Zylinder einstückig mit dem jeweiligen Rohrabschnitt ausgebildet sind. Bei einer einstückigen Ausformung ist zwangsweise eine Positionierung von Rohrabschnitt und Kolben bzw. Zylinder vorgegeben. Somit kann in einfacher Weise eine Montage von Kapselungsvolumen und Kompensationsvolumen vorgenommen werden.

Eine weitere vorteilhafte Ausgestaltung kann vorsehen, dass zur Kopplung zumindest des Zylinders ein Gewindeflansch in eine Mantelfläche eines der Rohrabschnitte eingeschraubt ist.

Die Verwendung eines Gewindeflansches ermöglicht es, ein und denselben Rohrkörper mit verschiedenartigen Zylindern bzw. Kolben zu kombinieren. Gegebenenfalls kann die Kombination auch wiederholt verändert werden. So ist es beispielsweise möglich, bei einem Verschleißen des Kolbens bzw. des Zylinders in einfacher Weise einen Austausch derselben vorzunehmen. Außerdem ist es möglich, aufgrund der Nutzung der Mantelfläche zur Verbindung mit dem Gewindeflansch eine schlanke Koppelstelle zu konstruieren. So ist es beispielsweise möglich, bei der Verwendung eines Rohrabschnittes mit einem im Wesentlichen kreisförmigen Querschnitt in dessen Außenmantelfläche oder auch in dessen Innenmantelfläche einen Gewindegang einzubringen, in welchem dann eine entsprechendes Innen- bzw. Außengewinde des Gewindeflansches eingeschraubt werden kann. Bei einer entsprechenden Lagefixierung des Gewindeflansches ist so eine dauerhafte winkelstarre Verbindung zwischen dem Kolben bzw. dem Zylinder und einem Rohrabschnitt gegeben. Der Gewindeflansch kann dabei einstückig mit dem Kolben oder mit dem Zylinder verbunden sein.

Weiterhin kann vorteilhaft vorgesehen sein, dass der zur Koppelung des Zylinders vorgesehene Gewindeflansch von dem Kanal durchsetzt ist.

Zur Verbindung des Kompensationsvolumens mit dem Kapselungsvolumen ist es vorteilhaft, einen entsprechenden Kanal zwischen beiden Volumina zur Verfügung zu stellen. Die Nutzung des Gewindeflansches zur Ausbildung eines Kanals ermöglicht es, einen kurzen Kanal auszubilden, so dass der Strömungswiderstand des Kanals begrenzt ist. Weiterhin ist es möglich, den Kanal auf eine Vielzahl von Teilkanälen aufzuteilen, und so einen möglichst großflächigen Kanalquerschnitt zur Verfügung zu stellen. So ist es beispielsweise möglich, am Umfang des Gewindeflansches verteilt mehrere radial zu einer Schraubachse des Gewindeflansches liegende Öffnungen an dem Gewindeflansch zu verteilen.

Weiterhin kann vorteilhaft vorgesehen sein, dass der Zylinder einen hohlzylindrischen Zylinderboden aufweist.

Die Verwendung eines hohlzylindrischen Zylinderbodens ermöglicht es, den Zylinder selbst von weiteren Baugruppen durchsetzen zu lassen. So ist es möglich, den Zylinder von einem Rohrabschnitt durchsetzen zu lassen. Dadurch kann am Umfang des Rohrabschnittes ein relativ schmal bauendes Kompensationsvolumen ausgebildet werden, welches in unmittelbarer Nähe zum Kapselungsvolumen befindlich ist. Dadurch ist der um das Kapselungsvolumen herum zur Verfügung gestellte Bauraum in günstiger Weise ausgenutzt.

Eine weitere vorteilhafte Ausgestaltung kann vorsehen, dass innerhalb des Kompensationsvolumens zwischen einer Zylinderwand und dem Kolben ein elektrisches Kontaktelement angeordnet ist.

Wie obenstehend ausgeführt ist üblicherweise vorgesehen, dass die Rohrabschnitte mit demselben elektrischen Potential, vorzugsweise Erdpotential, beaufschlagt sind. Dadurch ist ein Verschleppen von unterschiedlichen Spannungspotentialen vermieden. Dabei kann vorgesehen sein, dass jede der Rohrabschnitte unmittelbar und direkt mit einem Erdungsfestpunkt verbunden ist. Es kann jedoch auch vorgesehen sein, dass zusätzlich oder alternativ eine Verbindung der Rohrabschnitte untereinander erfolgt. Dazu kann beispielsweise vorgesehen sein, dass ein elektrisches Kontaktelement eine Zylinderwand und den Kolben elektrisch leitend miteinander kontaktiert. Die Zylinderwand kann beispielsweise eine stirnseitige Wand oder auch eine mantelseitige Wand des Zylinders sein. Durch eine Anordnung des Kontaktelementes im Innern des Kompensationsvolumens ist dieses ebenso wie das darin befindliche Isoliermedium hermetisch von der umgebenden Atmosphäre abgeschlossen. Damit sind die Kontaktpunkte des Kontaktelementes beispielsweise vor unerwünschter Korrosion oder auch vor dem Angreifen von äußeren Kräften geschützt.

Das Kontaktelement kann verschiedenartig ausgestaltet sein. Dabei kann eine vorteilhafte Ausgestaltung vorsehen, dass das Kontaktelement ein flexibles Leiterseil aufweist.

Ein flexibles Leiterseil ermöglicht, größere Strecken zu überbrücken und eine Relativbewegung zwischen den Kontaktpunkten an dem Kolben bzw. an der Zylinderwand flexibel verformbar zu überbrücken. Dazu kann im Innern des Kompensationsvolumens vorgesehener Bauraum günstig genutzt werden. Eine Alternative kann vorsehen, dass als Kontaktelemente Gleitkontakte oder ähnliches zum Einsatz kommen.

Eine weitere vorteilhafte Ausgestaltung kann vorsehen, dass das Kompensationsvolumen zumindest einen der Rohrabschnitte umgreift.

Durch ein Umgreifen zumindest eines der Rohrabschnitte durch das Kompensationsvolumen kann vorhandener Bauraum günstig ausgenutzt werden. In Kombination mit einem hohlzylindrischen Zylinderboden ergibt sich so eine große Zylinderfläche, welche bei einem geringen Hub eine vergleichsweise große Volumenänderung des Kapselungsvolumens kompensieren kann.

Dabei kann vorteilhaft weiterhin vorgesehen sein, dass die Rohrabschnitte koaxial zueinander ausgerichtet sind und zwischen den Rohrabschnitten ein Fügespalt angeordnet ist, welcher in radialer Richtung von dem Kompensationsvolumen überdeckt ist.

Eine koaxiale Ausrichtung der Rohrabschnitte zueinander ermöglicht es, zwischen diesen einen Fügespalt ausbilden zu lassen, welcher im Wesentlichen stirnseitig zwischen einander zugewandten Enden der Rohrabschnitte ausgebildet ist. Durch eine Überdeckung dieses Fügespaltes durch das Kompensationsvolumen in radialer Richtung ist eine geeignete Konstruktion gegeben, um einen möglichst kurzen Kanal zum Überströmen eines Isoliermediums zwischen dem Kompensationsvolumen und dem Kapselungsvolumen zur Verfügung zu stellen. Weiterhin wird ein relativ großer Zylinderquerschnitt bei einer radialen Überdeckung des Kompensationsvolumens des Fügespaltes zur Verfügung gestellt, so dass geringe Hübe bei einer Gleichheit der Flächen des Zylinderbodens sowie des Rohrquerschnittes des Kapselungsvolumens am Fügespalt ermöglicht ist.

Eine weitere vorteilhafte Ausgestaltung kann vorsehen, dass der Zylinder mit dem zweiten Rohrabschnitt gekoppelt ist und an dem ersten Rohrabschnitt fluiddicht gleitfähig anliegt. Ebenso kann weiter vorgesehen sein, dass der Kolben mit dem ersten Rohrabschnitt gekoppelt ist und an dem zweiten Rohrabschnitt fluiddicht gleitfähig anliegt.

Eine Kopplung von Zylinder und Kolben jeweils mit einem der Rohrabschnitte ermöglicht es, die Bewegbarkeit von den Rohrabschnitten in einfacher Weise auf den Kolben bzw. auf den Zylinder zu übertragen. Um trotz der relativen Bewegbarkeit einen hermetischen Verschluss des Kapselungsgehäuses sicherzustellen, ist eine gleitfähige Lagerung an dem jeweils anderen Rohrkörper des Kolbens bzw. des Zylinders vorteilhaft. Bei der gleitfähigen Lagerung ist die Möglichkeit gegeben, das Kapselungsgehäuse hermetisch zu versiegeln und einem Austreten von Isoliermedien aus dem Kompensationsvolumen bzw. aus dem Kapselungsvolumen des Kapselungsgehäuses heraus zu unterdrücken.

Vorteilhafterweise kann weiter vorgesehen sein, dass zum gleitfähigen fluiddichten Anliegen zwischen zwei axial beabstandeten ringförmigen Gleitlagen ein elastomerer ringförmiger Dichtkörper angeordnet ist.

Ein Vorsehen von ringförmigen Gleitlagern ermöglicht es, möglichst verkantungsfrei und reibungsarm eine Führung der Kolben bzw. des Zylinders auf den Rohrkörpern zu gewährleisten. Über einen elastomeren ringförmigen Dichtkörper kann eine entsprechende Fluiddichtigkeit auch bei einer Bewegung der Baugruppen relativ zueinander sichergestellt werden. Die beiden ringförmigen Gleitlager halten den Dichtkörper in Schieberichtung frei von Führungs- bzw. Haltekräften. Somit kann dieser speziell auf seine fluiddichtende Wirkung hin ausgelegt werden. Als elastomerer Dichtkörper eignen sich beispielsweise O-Ringe mit kreisförmigem Profil oder anderen geeigneten Profilierungen. Als ringförmige Gleitlager können beispielsweise Kunststoffringe, insbesondere aus Polytetrafluorethylen, vorgesehen sein, welche einen entsprechend günstigen Reibungskoeffizienten an den Rohrabschnitten zur Verfügung stellen.

Im Folgenden wird ein Ausführungsbeispiel der Erfindung schematisch in einer Zeichnung gezeigt und nachfolgend näher beschrieben.

Dabei zeigt die
- Figur: einen Schnitt durch ein einen ersten Rohrabschnitt und einen zweiten Rohrabschnitt aufweisendes Kapselungsgehäuse.

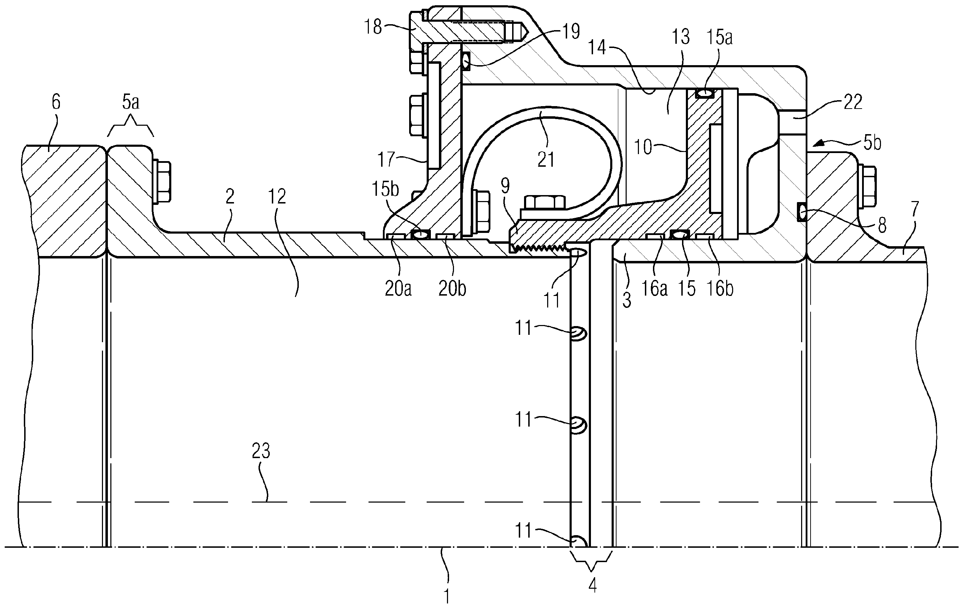

Die Figur zeigt einen Schnitt durch ein ausschnittsweise dargestelltes Kapselungsgehäuse. Das Kapselungsgehäuse erstreckt sich um eine Hauptachse 1. Koaxial zu der Hauptachse 1 sind ein erster Rohrabschnitt 2 sowie ein zweiter Rohrabschnitt 3 ausgerichtet. Die beiden Rohrabschnitte 2, 3 sind einander stirnseitig gegenüberliegend angeordnet und koaxial ausgerichtet. Vorzugsweise weisen der erste und der zweite Rohrabschnitt 2, 3 einen kreisförmigen Querschnitt auf. Zwischen den einander zugewandten Stirnseiten des ersten und des zweiten Rohrabschnitts 2, 3 ist ein Fügespalt 4 gebildet. An den voneinander abgewandten Enden des ersten und zweiten Rohrabschnittes 2, 3 sind entsprechende Verbindungselemente 5a, 5b vorgesehen, um die beiden Rohrabschnitte 2, 3 mit weiteren Baugruppen 6, 7 zu verbinden und so ein Kapselungsgehäuse auszubilden. Im vorliegenden Beispiel sind die Verbindungselemente 5a, 5b jeweils als Ringflansche ausgebildet, welche mit Ausnehmungen versehen sind, in welchen Bolzen geführt sind, um die Verbindungselemente 5a, 5b gegen entsprechende Anpressflächen der weiteren Baugruppen 6, 7 zu verspannen und zu positionieren. Dabei ist es vorteilhaft, wenn die Verbindungselemente 5a, 5b an den weiteren Baugruppen 6, 7 fluiddicht anliegen. Dazu kann beispielsweise eine Elastormerdichtung 8 vorgesehen sein.

In einer Außenmantelfläche des ersten Rohrabschnittes 2 ist an dem den Fügespalt 4 zugewandten Ende ein Außengewinde eingebracht. Auf dieses Außengewinde ist ein Gewindeflansch 9 aufgeschraubt und fixiert, so dass eine winkelstarre Verbindung zwischen dem ersten Rohrabschnitt 2 und dem Gewindeflansch 9 hergestellt ist. Der Gewindeflansch 9 weist einen Kolben 10 mit einer ringförmigen Kolbenfläche auf. Der Kolben 10 ist dabei mit seiner Ringstruktur koaxial zur Hauptachse 1 ausgerichtet und umgreift die äußere Mantelfläche des zweiten Rohrabschnittes 3. Der Gewindeflansch 9 ist im Wesentlichen rohrförmig strukturiert und weist an seiner dem ersten Rohrabschnitt 2 zugewandten Ende einen um die Hauptachse 1 umlaufenden Gewindegang auf. Im Bereich des Fügespaltes 4 sind in den Gewindeflansch 9 mehrere Öffnungen 11 eingebracht. Die Öffnungen 11 sind in Form von Bohrungen eingebracht, wobei die Achsen der Öffnungen radial zur Hauptachse 1 ausgerichtet sind. Über die Öffnungen 11 ist ein Kanal gebildet, welcher das zumindest teilweise von den beiden Rohrabschnitten 2, 3 begrenzte Kapselungsvolumen 12 mit einem radial um den Fügespalt 4 umlaufenden Kompensationsvolumen 13 verbindet. Das Kompensationsvolumen 13 wird von einer Zylinderwand 14 begrenzt. Die Zylinderwand 14 ist teilweise einstückig an den zweiten Rohrabschnitt 3 angeformt. Die Zylinderwand 14 ist koaxial zur Hauptachse 1 ausgerichtet. Zwischen einer Innenmantelfläche der Zylinderwand 14 und der Außenmantelfläche des zweiten Rohrabschnittes 3 ist der Kolben 10 bündig eingepasst. Um eine dichtende Wirkung zu erreichen, ist in der der Außenmantelfläche des zweiten Rohrabschnittes 3 zugewandten Wandung des Kolbens 10 eine Nut eingefügt, in welche ein elastomerer Dichtkörper 15 eingelegt ist. Zur Führung und Abstützung des Kolbens 10 auf der Außenmantelfläche des zweiten Rohrabschnittes 3 sind bezogen auf die Hauptachse 1 beiderseits des elastomeren Dichtkörpers 15 ringförmige Gleitlager 16a, 16b angeordnet. Die ringförmigen Gleitlager 16a, 16b weisen jeweils Polytetrafluorethylenringe auf, die in entsprechende Nuten des Kolbens 10 eingelegt sind und auf der äußeren Mantelfläche des zweiten Rohrabschnittes 3 aufliegen. Um eine Dichtung des Kolbens 10 auch an der Innenmantelfläche der Zylinderwand 14 zu erzielen, ist in einer Umfangsfläche des Kolbens 10 eine ringförmig umlaufende Nut eingebracht, welche mit einem weiteren elastomeren Dichtkörper 15a befüllt ist. Dadurch ist es sichergestellt, dass der Kolben 10 mit seiner kreisringförmigen Kolbenfläche sowohl dichtend an der Innenmantelfläche der Zylinderwand 14 als auch dichtend an der äußeren Mantelfläche des zweiten Rohrabschnittes 3 anliegt. Um den Zylinder gasdicht abzuschließen und somit ein Kompensationsvolumen zur Verfügung zu stellen, weist die Zylinderwand 14 einen kopfseitigen Abschnitt 17 auf. Der kopfseitige Abschnitt 17 ist mittels einer Schraubverbindung 18 mantelseitig winkelstarr verschraubt. Ein Dichtkörper 19 stellt einen fluiddichten Verbund her. Der kopfseitige Abschnitt 17 des Zylinders weist eine im Wesentlichen hohlzylindrische Struktur auf, wobei in einer Innenmantelfläche des kopfseitigen Abschnittes 17 eine ringförmige umlaufende Ausnehmung vorgesehen ist, in welcher ein zusätzlicher elastomerer Dichtkörper 15b angeordnet ist. Bezogen auf die Hauptachse 1 ist beiderseits des zusätzlichen elastomeren Dichtkörpers 15b jeweils ein ringförmiges Gleitlager 20a, 20b angeordnet. Die ringförmigen Gleitlager 20a, 20b weisen in entsprechende Ausnehmungen eingelegte Polytetrafluorethylenringe auf, welche ein Gleiten des kopfseitigen Abschnittes 17 und damit des Zylinders auf einer Außenmantelfläche des ersten Rohrabschnittes 2 ermöglichen.

Über den elastomeren Dichtkörper 15, den weiteren elastomeren Dichtkörper 15a sowie den zusätzlichen elastomeren Dichtkörper 15b ist das Kapselungsgehäuse gleitend fluiddicht abgeschlossen. Der Dichtkörper 19 bildet eine fluiddichte Verbindung zwischen Baugruppen der Zylinderwand 14 aus.

Im Innern des Kompensationsvolumens 13 ist weiterhin ein elektrisches Kontaktelement 21 angeordnet. Das elektrische Kontaktelement 21 ist in Form eines reversibel verformbaren elektrischen Leiterzuges ausgebildet, welcher an seinen Endseiten jeweils mit dem Kolben 10 bzw. mit dem Zylinder elektrisch leitend kontaktiert ist. Dadurch ist sichergestellt, dass Kolben 10 und Zylinder dasselbe elektrische Potential aufweisen und der Fügespalt elektrisch überbrückt ist. Über die Anformung des Zylinders an den zweiten Rohrabschnitt 3 ist weiterhin eine elektrische Kontaktierung von erstem Rohrabschnitt 2, von dem zweiten Rohrabschnitt 3, dem Zylinder sowie dem Kolben 10 gewährleistet. Durch die Verwendung eines Gewindeflansches 9, an welchen der Kolben 10 angeformt ist, ist auch der erste Rohrabschnitt 2 mit dem Kolben 10, mit dem Zylinder sowie dem zweiten Rohrabschnitt 3 elektrisch leitend kontaktiert.

Der erste Rohrabschnitt 2 ist starr mit dem Kolben 10 verbunden. Der zweite Rohrabschnitt 3 ist starr mit dem Zylinder verbunden. Zur Verbindung des Kolbens 10 mit dem ersten Rohrabschnitt 2 kann auch eine alternative Ausgestaltung des Gewindeflansches 9 vorgesehen sein. So kann beispielsweise vorgesehen sein, dass im Bereich des dem Fügespalt 4 zugewandten Endes des ersten Rohrabschnittes 2 ein Innengewindegang in den ersten Rohrabschnitt 2 eingebracht ist und der Gewindeflansch mit einem entsprechenden Außengewinde versehen ist, welches gegengleich in das Innengewinde eingreifen kann. Des Weiteren kann auch vorgesehen sein, einen Schweißflansch zur Verbindung des Kolbens 10 mit dem zweiten Rohrabschnitt 3 einzusetzen oder den Kolben 10 einstückig an den ersten Rohrabschnitt 2 anzuformen. Weiterhin können auch alternative Befestigungsverfahren sowie alternative Flansche Einsatz finden.

Das Kompensationsvolumen 13 ist über die als Kanal wirkenden Öffnungen 11 mit dem Kapselungsvolumen 12 verbunden. Aufgrund der starren Kopplung von Kolben 10 und erstem Rohrabschnitt 2 sowie von Zylinder und dem zweiten Rohrabschnitt 3 erfolgt bei einer Relativbewegung der beiden Rohrabschnitte 2, 3 zueinander eine gegengleich gerichtete Relativbewegung zwischen Kolben 10 und Zylinder. Dabei ist bei dem vorliegenden Ausführungsbeispiel vorgesehen, dass der Rohrquerschnitt der den Fügespalt 4 begrenzenden Rohrabschnitte 2, 3 dem Kolbenquerschnitt des Kolbens 10 entspricht. Dadurch erfolgt bei einem gleichen Relativhub der Rohrabschnitte 2, 3 zueinander, sowie des Kolbens 10 und des Zylinders zueinander eine gleichartig proportionale Änderung der zur Verfügung stehenden Volumina im Kapselungsvolumen 12 sowie im Kompensationsvolumen 13. Damit ist es möglich, dass Relativbewegungen zwischen den beiden Rohrabschnitten 2, 3 nahezu frei von Kompressions- bzw. Expansionskräften erfolgen, die von dem im Innern des Kapselungsgehäuses befindlichen Fluids ausgehen können. Um ein Aufbau eines Über- bzw. Unterdruckes zu vermeiden, ist in dem Zylinder im Bereich des Kolbenbodens auf der von dem Kompensationsvolumen abgewandten Seite des Kolbens 10 eine Ausströmöffnung 22 vorgesehen. Das Kapselungsgehäuse weist das Kapselungsvolumen 12, sowie das Kompensationsvolumen 13 auf. Kapselungsvolumen 12 und Kompensationsvolumen 13 kommunizieren über die Öffnungen 11. Während die Volumina von Kapselungsvolumen 12 und Kompensationsvolumen 13 variabel sind, ist das Volumen des Kapselungsgehäuses unabhängig von einer Relativbewegung annähernd konstant. Das Kapselungsgehäuse grenzt ein im Innern angeordnetes Fluid hermetisch von einer Umgebung ab. Die Rohrabschnitte 2, 3 der Kolben 10 sowie die Zylinderwand 14 können vorzugsweise elektrisch leitend ausgeführt sein.

Bei einer Verwendung der Anordnung in einer druckgasisolierten Energieübertragungseinrichtung ist beispielsweise ein elektrisch aktives Leiterelement 23 koaxial zur Hauptachse 1 im Innern des Kapselungsgehäuses angeordnet. Das im Innern des Kapselungsgehäuses befindliche Fluid isoliert den elektrisch aktiven Phasenleiter 23 gegenüber den beiden Rohrabschnitten 2, 3. Dazu kann vorgesehen sein, dass das elektrisch isolierende Fluid beispielsweise ein Isolieröl, ein Isoliergas, wie Stickstoff, Schwefelhexafluorid, oder auch ein Vakuum, welches im Sinne dieser Anmeldung auch als Fluid zu verstehen ist, im Innern des Kapselungsgehäuses unter einem erhöhtem Druck steht. Eine Beabstandung und Positionierung des elektrisch aktiven Leiterelementes 23 erfolgt gegenüber dem Kapselungsgehäuse über in der Figur nicht dargestellte Feststoffisolatoren, die beispielsweise scheibenförmig quer zur Hauptachse 1 in dem Kapselungsgehäuse angeordnet sein können. Weiterhin können auch säulenförmige Stützisolatoren zur Positionierung des elektrisch aktiven Leiterelementes 23 Verwendung finden.

## Patentansprüche

1. Kapselungsabschnitt einer druckgasisolierten Elektroenergieübertragungseinrichtung mit einem Kapselungsgehäuse aufweisend einen ersten Rohrabschnitt (2) und einen zweiten Rohrabschnitt (3), die relativ zueinander bewegbar sind und zumindest ein variables Kapselungsvolumen (12) teilweise begrenzen und der Kapselungsabschnitt zumindest ein elektrisch aktives Leiterelement (23) umgibt, wobei ein Kanal (11) das Kapselungsvolumen (12) mit einem umgekehrt proportional zu einer Volumenänderung des Kapselungsvolumens (12) veränderbaren Kompensationsvolumen (13) verbindet, **dadurch gekennzeichnet, dass** das Kompensationsvolumen (13) einen Kolben (10) und einen Zylinder aufweist, wobei der Kolben (10) und der Zylinder jeweils mit einem der Rohrabschnitte (2, 3) gekoppelt sind, wobei zur Kopplung des Kolbens (10) ein Gewindeflansch (9) in eine Mantelfläche eines der Rohrabschnitte (2, 3) eingeschraubt und von dem Kanal (11) durchsetzt ist.

2. Kapselungsabschnitt einer druckgasisolierten Elektroenergieübertragungseinrichtung nach Anspruch 1, **dadurch gekennzeichnet, dass** der Zylinder mit einem der Rohrabschnitte (2, 3) starr gekoppelt ist.

3. Kapselungsabschnitt einer druckgasisolierten Elektroenergieübertragungseinrichtung nach Anspruch 2, **dadurch gekennzeichnet, dass** zur starren Kopplung des Zylinders mit einem der Rohrabschnitte (2, 3) ein Abschnitt des Zylinders an den jeweiligen Rohrabschnitt (2, 3) angeformt ist.

4. Kapselungsabschnitt einer druckgasisolierten Elektroenergieübertragungseinrichtung nach einem der Ansprüche 1 bis 3, **dadurch gekennzeichnet, dass** zur Kopplung zumindest des Zylinders ein Gewindeflansch (9) in eine Mantelfläche eines der Rohrabschnitte (2, 3) eingeschraubt ist.

5. Kapselungsabschnitt einer druckgasisolierten Elektroenergieübertragungseinrichtung nach Anspruch 4, **dadurch gekennzeichnet, dass** der Gewindeflansch (9) von dem Kanal (11) durchsetzt ist.

6. Kapselungsabschnitt einer druckgasisolierten Elektroenergieübertragungseinrichtung nach einem der Ansprüche 1 bis 5, **dadurch gekennzeichnet, dass** der Zylinder einen hohlzylindrischen Zylinderboden aufweist.

7. Kapselungsabschnitt einer druckgasisolierten Elektroenergieübertragungseinrichtung nach einem der Ansprüche 1 bis 6, **dadurch gekennzeichnet, dass** innerhalb des Kompensationsvolumens (13) zwischen einer Zylinderwand (14) und dem Kolben (10) ein elektrisches Kontaktelement (21) angeordnet ist.

8. Kapselungsabschnitt einer druckgasisolierten Elektroenergieübertragungseinrichtung nach Anspruch 7, **dadurch gekennzeichnet, dass** das Kontaktelement (21) ein flexibles Leiterseil aufweist.

9. Kapselungsabschnitt einer druckgasisolierten Elektroenergieübertragungseinrichtung nach einem der Ansprüche 1 bis 8, **dadurch gekennzeichnet, dass** das Kompensationsvolumen (13) zumindest einen der Rohrabschnitte (2, 3) umgreift.

10. Kapselungsabschnitt einer druckgasisolierten Elektroenergieübertragungseinrichtung nach einem der Ansprüche 1 bis 9, **dadurch gekennzeichnet, dass** die Rohrabschnitte (2, 3) koaxial zueinander ausgerichtet sind und zwischen den Rohrabschnitten (2, 3) ein Fügespalt (4) angeordnet ist, welcher in radialer Richtung von dem Kompensationsvolumen (13) überdeckt ist.

11. Kapselungsabschnitt einer druckgasisolierten Elektroenergieübertragungseinrichtung nach einem der Ansprüche 1 bis 10, **dadurch gekennzeichnet, dass** der Zylinder mit dem zweiten Rohrabschnitt (3) gekoppelt ist und an dem ersten Rohrabschnitt (2) fluiddicht gleitfähig anliegt.

12. Kapselungsabschnitt einer druckgasisolierten Elektroenergieübertragungseinrichtung nach einem der Ansprüche 1 bis 10, **dadurch gekennzeichnet, dass** der Kolben (10) mit dem ersten Rohrabschnitt (2) gekoppelt ist und an dem zweiten Rohrabschnitt (3) fluiddicht gleitfähig anliegt.

13. Kapselungsabschnitt einer druckgasisolierten Elektroenergieübertragungseinrichtung nach Anspruch 11 oder Anspruch 12, **dadurch gekennzeichnet, dass** zum gleitfähigen fluiddichten Anliegen zwischen zwei axial beabstandeten ringförmigen Gleitlagen (16a, 16b, 20a, 20b) ein elastomerer ringförmiger Dichtkörper (15, 15b) angeordnet ist.

## Claims

1. Encapsulating section of a compressed-gas-insulated electrical power transmission device having an encapsulating housing having a first tubular section (2) and a second tubular section (3) which can move relative to one another and partially bound at least one variable encapsulating volume (12) and the encapsulating section surrounds at least one electrically active conductor element (23), wherein
a channel (11) connects the encapsulating volume (12) to a compensation volume (13), which is variable in inverse proportion to a volume change of the encapsulating volume (12) **characterized in that**
the compensation volume (13) has a piston (10) and a cylinder, wherein the piston (10) and the cylinder are each coupled to one of the tubular sections (2, 3), wherein, in order to couple the piston (10), a threaded flange (9) is screwed into an envelope surface of one of the tubular sections (2, 3) and the channel (11) passes through said threaded flange.

2. Encapsulating section of a compressed-gas-insulated electrical power transmission device according to Claim 1,
**characterized in that**
the cylinder is rigidly coupled to one of the tubular sections (2, 3).

3. Encapsulating section of a compressed-gas-insulated electrical power transmission device according to Claim 2, **characterized in that**
in order to rigidly couple the cylinder to one of the tubular sections (2, 3), a section of the cylinder is integrally formed on the respective tubular section (2, 3).

4. Encapsulating section of a compressed-gas-insulated electrical power transmission device according to one of Claims 1 to 3,
**characterized in that**,
in order to couple at least the cylinder, a threaded flange (9) is screwed into an envelope surface of one of the tubular sections (2, 3).

5. Encapsulating section of a compressed-gas-insulated electrical power transmission device according to Claim 4,
**characterized in that**
the channel (11) passes through the threaded flange (9).

6. Encapsulating section of a compressed-gas-insulated electrical power transmission device according to one of Claims 1 to 5,
**characterized in that**
the cylinder has a hollow-cylindrical cylinder base.

7. Encapsulating section of a compressed-gas-insulated electrical power transmission device according to one of Claims 1 to 6,
**characterized in that**
an electrical contact element (21) is arranged between a cylinder wall (14) and the piston (10) within the compensation volume (13).

8. Encapsulating section of a compressed-gas-insulated electrical power transmission device according to Claim 7,
**characterized in that**
the contact element (21) has a flexible conductor cable.

9. Encapsulating section of a compressed-gas-insulated electrical power transmission device according to one of Claims 1 to 8,
**characterized in that**
the compensation volume (13) surrounds at least one of the tubular sections (2, 3).

10. Encapsulating section of a compressed-gas-insulated electrical power transmission device according to one of Claims 1 to 9,
**characterized in that**
the tubular sections (2, 3) are aligned coaxially with respect to one another, and a joint gap (4) is arranged between the tubular sections (2, 3) and is covered in the radial direction by the compensation volume (13).

11. Encapsulating section of a compressed-gas-insulated electrical power transmission device according to one of Claims 1 to 10,
**characterized in that**
the cylinder is coupled to the second tubular section (3) and rests on the first tubular section (2) in a fluid-tight manner, such that it can slide.

12. Encapsulating section of a compressed-gas-insulated electrical power transmission device according to one of Claims 1 to 10,
**characterized in that**
the piston (10) is coupled to the first tubular section (2) and rests on the second tubular section (3) in a fluid-tight manner, such that it can slide.

13. Encapsulating section of a compressed-gas-insulated electrical power transmission device according to Claim 11 or Claim 12,
**characterized in that**
an elastomer annular sealing body (15, 15b) is arranged between two annular sliding bearings (16a, 16b, 20a, 20b), which are axially separated from one another, for the fluid-tight contact allowing sliding.

## Revendications

1. Partie d'encapsulation d'un dispositif de transport d'énergie électrique à isolation par du gaz sous pression, comprenant un boîtier d'encapsulation ayant une première partie (2) tubulaire et une deuxième partie (3) tubulaire, qui sont mobiles l'une par rapport à l'autre et qui délimitent ensemble, en partie, un volume (12) d'encapsulation variable et la partie d'encapsulation entoure, au moins en partie, un élément (23) conducteur actif du point de vue électrique, dans laquelle
un conduit (11) met le volume (12) d'encapsulation en communication avec un volume (13) de compensation pouvant se modifier d'une manière inversement proportionnelle à une variation du volume (12) d'encapsulation,
**caractérisée en ce que**
le volume (13) de compensation a un piston (10) et un cylindre, le piston (10) et le cylindre étant accouplés chacun à l'une des parties (2, 3) tubulaires, dans lequel, pour l'accouplement du piston, une bride (9) filetée est vissée dans une surface latérale de l'une des parties (2, 3) tubulaires et est traversée par le conduit (11).

2. Partie d'encapsulation d'un dispositif de transport d'énergie électrique à isolation par du gaz sous pression suivant la revendication 1,
**caractérisée en ce que**
le cylindre est accouplé rigidement à l'une des parties (2, 3) tubulaires.

3. Partie d'encapsulation d'un dispositif de transport d'énergie électrique à isolation par du gaz sous pression suivant la revendication 2,
**caractérisé en ce que**,
pour l'accouplement rigide du cylindre à l'une des parties (2, 3) tubulaires, une partie du cylindre vient de matière avec la partie (2, 3) tubulaire respective.

4. Partie d'encapsulation d'un dispositif de transport d'énergie électrique à isolation par du gaz sous pression suivant l'une des revendications 1 à 3,
**caractérisée en ce que**,
pour l'accouplement au moins du cylindre, une bride (9) filetée est vissée dans une surface latérale de l'une des parties (2, 3) tubulaires.

5. Partie d'encapsulation d'un dispositif de transport d'énergie électrique à isolation par du gaz sous pression suivant la revendication 4,
**caractérisée en ce que**
la bride (9) filetée est traversée par le conduit (11).

6. Partie d'encapsulation d'un dispositif de transport d'énergie électrique à isolation par du gaz sous pression suivant l'une des revendications 1 à 5,
**caractérisée en ce que** le cylindre a un fond cylindrique creux.

7. Partie d'encapsulation d'un dispositif de transport d'énergie électrique à isolation par du gaz sous pression suivant l'une des revendications 1 à 6,
**caractérisée en ce qu'**
à l'intérieure du volume (13) de compensation, un élément (21) de contact électrique est disposé entre une paroi (14) du cylindre et le piston (10).

8. Partie d'encapsulation d'un dispositif de transport d'énergie électrique à isolation par du gaz sous pression suivant la revendication 7,
**caractérisée en ce que**
l'élément (21) de contact a un câble conducteur souple.

9. Partie d'encapsulation d'un dispositif de transport d'énergie électrique à isolation par du gaz sous pression suivant l'une des revendications 1 à 8,
**caractérisée en ce que**
le volume (13) de compensation entoure au moins l'une des parties (2, 3) tubulaires.

10. Partie d'encapsulation d'un dispositif de transport d'énergie électrique à isolation par du gaz sous pression suivant l'une des revendications 1 à 9,
**caractérisée en ce que**
les parties (2, 3) tubulaires sont dirigées coaxialement l'une par rapport à l'autre et, entre les parties (2, 3) tubulaires, est disposé un intervalle (4) de jonction, qui est recouvert en direction radiale par le volume (13) de compensation.

11. Partie d'encapsulation d'un dispositif de transport d'énergie électrique à isolation par du gaz sous pression suivant l'une des revendications 1 à 10,
**caractérisée en ce que**
le cylindre est accouplé à la deuxième partie (13) tubulaire et s'applique, avec possibilité de glisser d'une manière étanche au fluide, à la première partie (2) tubulaire.

12. Partie d'encapsulation d'un dispositif de transport d'énergie électrique à isolation par du gaz sous pression suivant l'une des revendications 1 à 10,
**caractérisée en ce que**
le piston (10) est accouplé à la première partie (2) tubulaire et s'applique, avec possibilité de glisser d'une manière étanche au fluide, à la deuxième partie (3) tubulaire.

13. Partie d'encapsulation d'un dispositif de transport d'énergie électrique à isolation par du gaz sous pression suivant la revendication 11 ou la revendication 12,
**caractérisée en ce que**,
pour l'application d'une manière étanche au fluide avec possibilité de glisser, un joint (15, 15b) annulaire en élastomère est disposé entre deux paliers (16a, 16b, 20a, 20b) lisses annulaires mis à distance axialement.
